# EUROPEAN PATENT SPECIFICATION

(11) **EP 3 174 079 B1**
(45) Date of publication and mention of the grant of the patent: **15.05.2019**
(21) Application number: 14898536.9
(22) Date of filing: 26.07.2014
(51) Int. Cl.: H01H 13/06, H04M 1/02, H01H 13/86, H04B 1/3888, H04M 1/18, H04M 1/23, H04B 1/38

(54) **WATERPROOF KEY STRUCTURE AND WATERPROOF MOBILE PHONE UTILIZING SAME**
WASSERDICHTE TASTENSTRUKTUR UND WASSERDICHTES MOBILTELEFON DAMIT
STRUCTURE DE TOUCHE ÉTANCHE À L'EAU ET TÉLÉPHONE MOBILE ÉTANCHE À L'EAU L'UTILISANT

(43) Date of publication of application: 31.05.2017
(73) Proprietor: Power Idea Technology (Shenzhen) Co., Ltd., Shenzhen, Guangdong 518057 (CN)
(72) Inventor: MA, Jidong, Shenzhen, Guangdong 518057 (CN); CHEN, Dongming, Shenzhen, Guangdong 518057 (CN)
(74) Representative: CMS Cameron McKenna Nabarro Olswang LLP
(86) International application number: PCT/CN2014/083099
(87) International publication number: WO 2016/015185

(56) References cited:
- EP-A1- 2 738 783
- WO-A1-2014/092117
- DE-A1- 3 521 176
- JP-A- 2009 070 657
- US-A- 4 170 104
- US-A1- 2007 034 493
- US-A1- 2009 159 412
- US-A1- 2011 005 908

## Description

### FIELD

The subject matter herein generally relates to waterproof structures of outdoor electronic devices, and particularly, to a waterproof key structure and a waterproof mobile phone utilizing the waterproof key structure.

### BACKGROUND

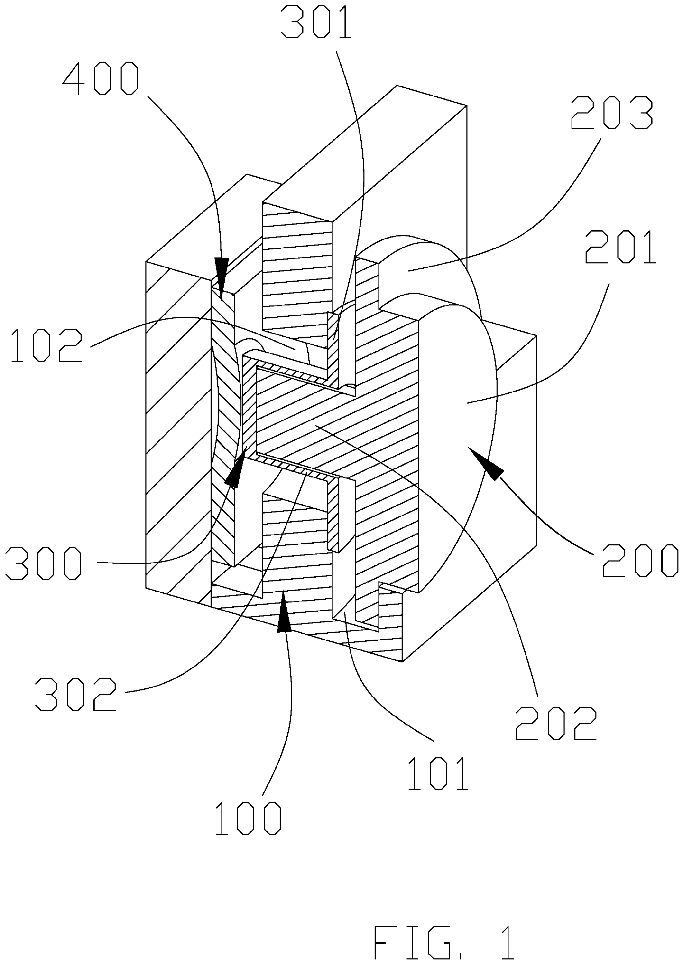

Outdoor electronic devices must withstand the complex outdoor environment, which imposing new challenges on manufacturing and assembly processes of these electronic devices, such as be waterproofing. Waterproofing for keys or buttons of electronic devices are more difficult since the keys or buttons are generally installed in a limited space and move under repeated presses to input characters or commands. Referring to FIG. 1 which shows a waterproof key structure of an outdoor mobile phone, the waterproof key structure includes a shell 100, a key 200, a silicone element 300, and a switch 400. The key 200 includes a key cap 201 and a post 202. A stepped flange 203 extends from periphery of the key cap 201. A slot 101 is defined in the shell 100. Along a thickness direction of the flange 203, the slot 101 has a width larger than the thickness the flange 203. Thus, the flange 203 can be movably assembled in the slot 101 to realize the movement and stop of the key 200 under presses. The silicone member 300 includes a crown 302 and a brim 301. A through hole 102 is defined in the shell 100 corresponding to the crown 302. The crown 302 is received in the through hole 102, with the flange 301 being stuck to the shell 100 surrounding the through hole 102 using double faced adhesive tapes. The post 202 is received in the crown 302 and abuts against the bottom of the crown 302. The switch 400 is assembled to the shell 100 and faces the through hole 102. Meanwhile the bottom of the crown 302 contacts the switch 400. When the key 200 is pressed, the post 202 exerts a force on the bottom of the crown 302 and deforms the crown 302, and thus presses and triggers the switch 400. When the key 200 is released, the deformed crown 302 rebounds and restores the key 200. In said waterproof key structure, since the key 200 always needs to be pressed to trigger input and then rebounds, the silicone member 300 must be deformed repeatedly to trigger the switch 400. For the assembling of the silicone member 300 to the shell 100 and the waterproofing between them are achieved by sticking the brim 301 to the shell 100, with the repeated deformation of the crown 302, the adhesive tapes between the brim 301 and the shell 100 endure shear forces and easily break away and fail, which affects the stabilization of the sticking between the elastic member 300 and the shell 100. After a number of times the key 200 being pressed, the silicone member 300 easily breaks away from the shell 100, and results in the failure of the key 200, and meanwhile results in the failure of the sealing and waterproofing between the key 200 and the shell 100. Furthermore, the bottom of the crown 302 is thin and has limited effect to buffer strong force. When the mobile phone is dropped and an external force acts on the key 200 directly, the strong impact on the key 200 will be passed directly to the switch 400, the switch 400 may be destroyed , or loosened or broken away and fail to work. What is more, the silicone member 300 is made of soft material, precise relative positioning of the elastic member 300 is difficult to achieve and even sticking to the shell 100 as well when the silicone member 300 is assembled to the shell 100 and thus the quality and productivity of the waterproof key structure are affected. An example of waterproof key of the prior art is disclosed in DE-A-3521176.

### SUMMARY OF THE INVENTION

The technical issue that the present invention to solve is to provide a waterproof key structure. The structure can solve the problem in the prior art that the silicone member easily breaks away from the shell and results in key failure and waterproof failure after repeated press-down of the key.

A waterproof key structure, includes a shell, a key, and an elastic member. The elastic member is adhesively assembled to the shell, the key is movably assembled to the shell, wherein: the elastic member includes a tubular structure, the tubular structure is formed with an elastic wall, the elastic wall is of an arched structure, the elastic wall protrudes towards inside of the tubular structure to form the elastic member the elastic member the elastic member the elastic member the elastic member the elastic member the elastic member.

A waterproof key structure, includes a shell, a key and an elastic member. The key is movably assembled to the shell, wherein: the elastic member includes a tubular structure, the tubular structure is formed with an elastic wall, the elastic wall is of an arched structure and protrudes towards inside of the tubular structure, a hole is defined in the shell corresponding to the tubular structure, and the tubular structure is press fitted in the hole.

A waterproof mobile phone, employs any one of the above waterproof key structure.

The advantageous effects of the present invention are those: the waterproof structure of the present invention improves the silicone member of the prior art by forming an elastic wall on the elastic member, thus, when the key functions, the elastic member deforms via the elastic wall under the force, for the elastic wall itself being of an arched structure and having a deformable length, the deformation of the elastic wall produce little effect on others, and thus does not destabilize the adhesion between the elastic member and the shell, and thus the key failure resulted from the elastic member breaking away from the shell reduces.

The present invention employs deformation of an elastic member of an arched structure to absorb external force applied between the elastic member and the shell, and the tubular structure being press-fitted in the hole the elastic member, thus as compared to the prior art which depends solely on the pasting between the silicone member and the shell to resist water, the reliability of water resistance between the key and the shell is improved.

### BRIEF DESCRIPTION OF THE DRAWINGS

In order to make the technical solutions more clear, the present invention will be introduced further in conjunction with the accompanying drawings.
FIG. 1 is a schematic view of a key structure of prior art.
FIG. 2 is an exploded view of a waterproof mobile phone according to an embodiment of the present invention.
FIG. 3 is an enlarged view of portion "R" of FIG. 2.
FIG. 4 is a schematic view of an elastic member of the waterproof mobile phone of FIG. 2.
FIG. 5 is a schematic view of the elastic member of FIG. 4, viewed from another angle.
FIG. 6 is a schematic view of a key of the waterproof mobile phone of FIG. 2.
FIG. 7 is an assembled view of the waterproof mobile phone of FIG. 2.
FIG. 8 is a cross sectional view taken along line "A-A" of FIG. 7.

### DETAILED DESCRIPTION

To make the objective, the solution and the advantage of the present invention more clear, the present disclosure is made in conjunction with the accompanying drawings and specific embodiments to illustrate a waterproof mobile phone with a waterproof key structure of the present invention.

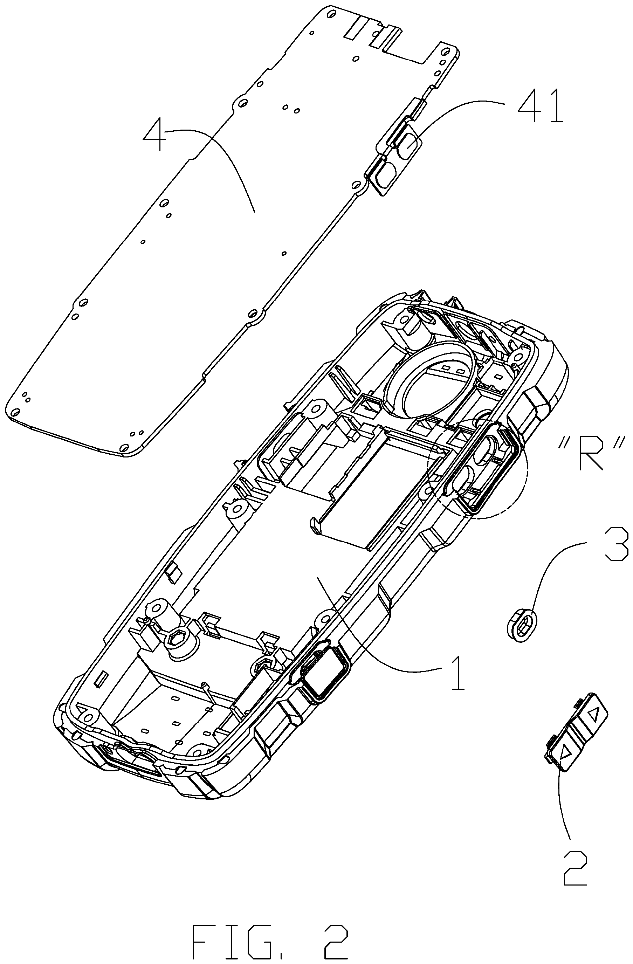

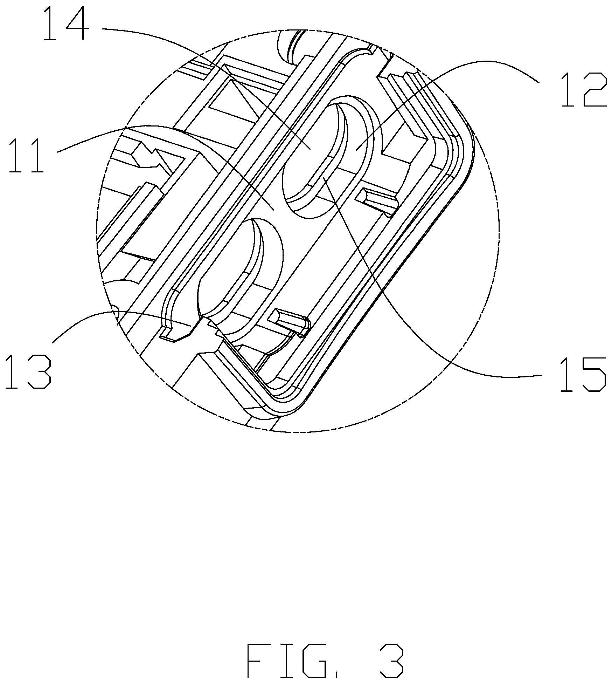

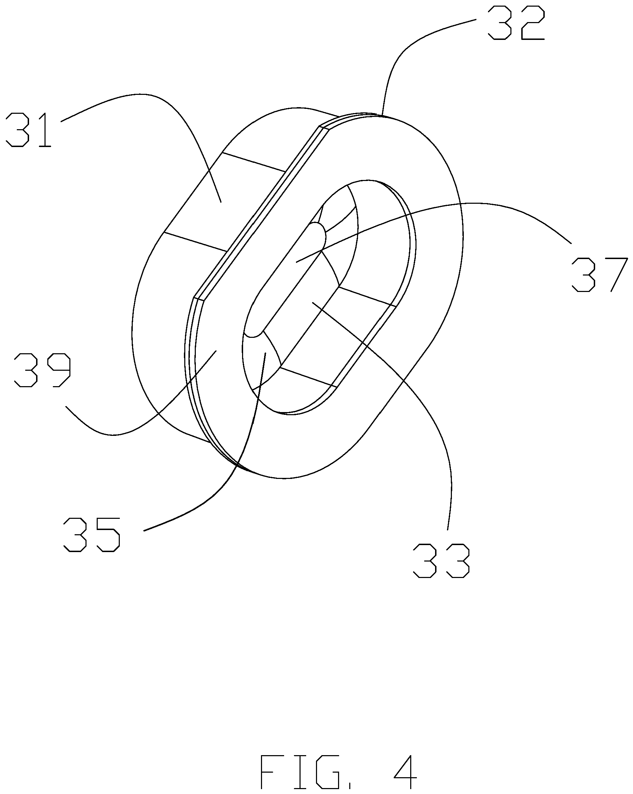

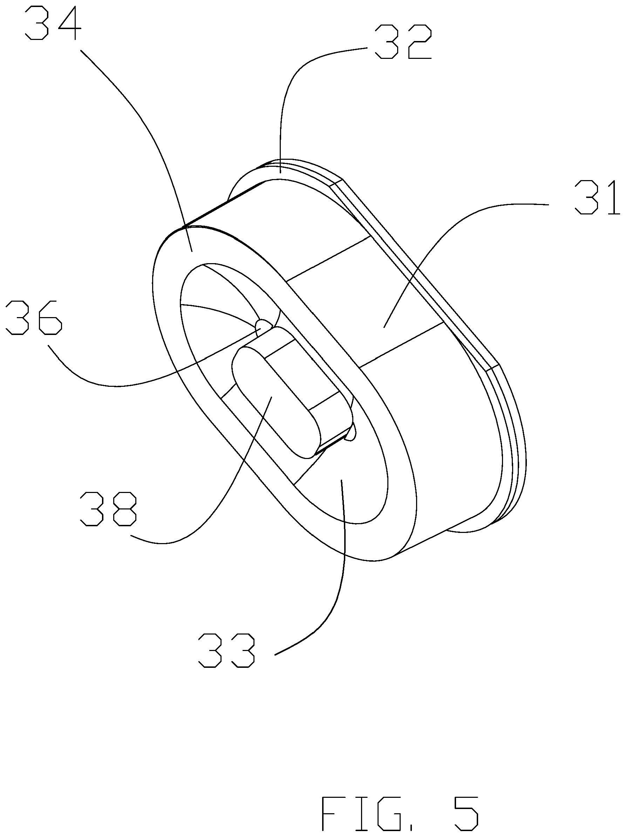

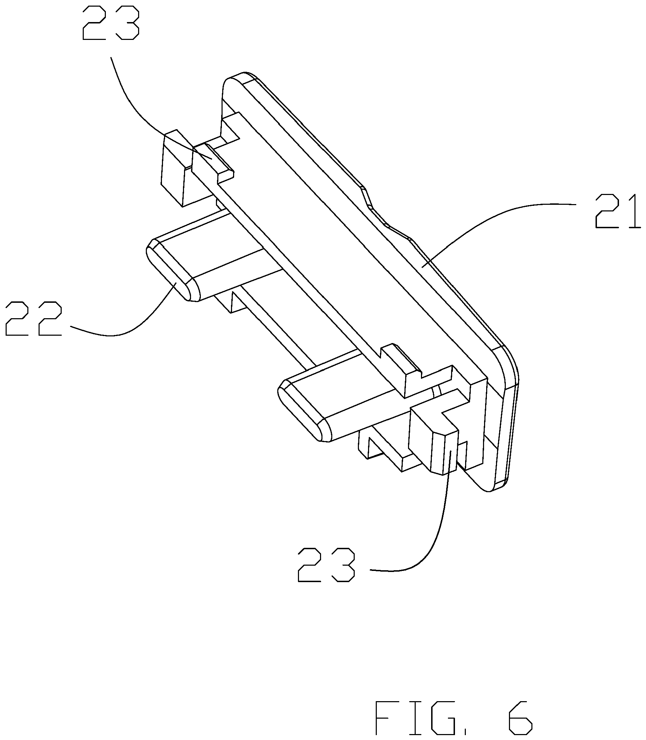

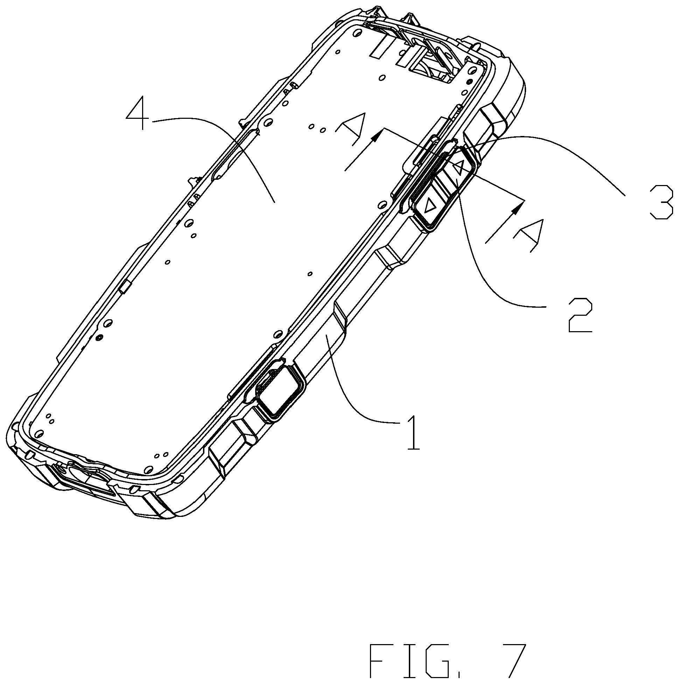

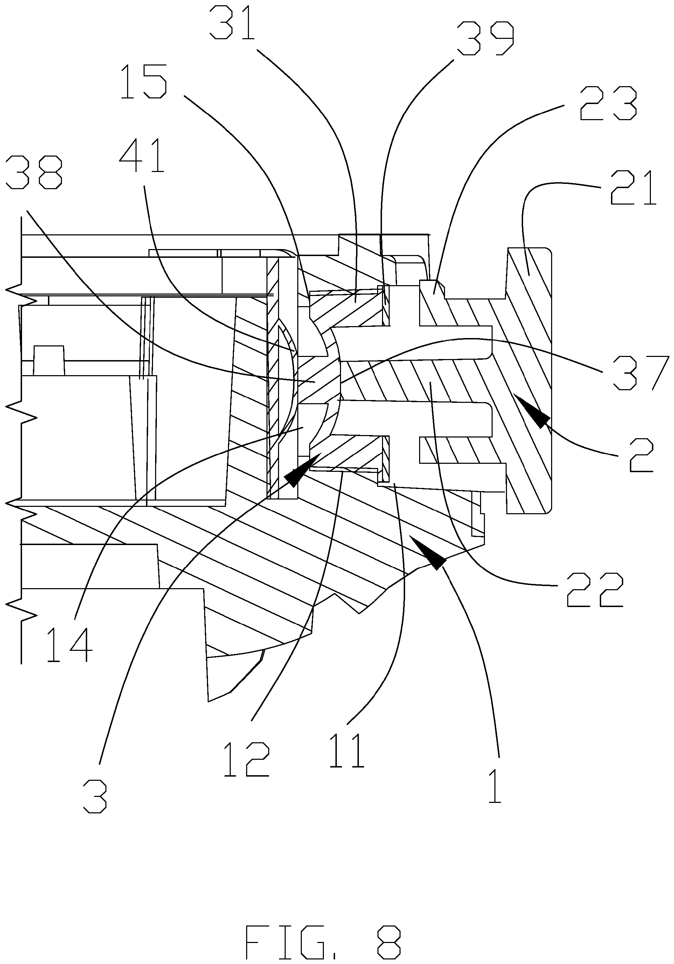

Referring to FIGs 2-8, schematic views of a waterproof key structure of an outdoor mobile phone are shown. FIG. 2 is an exploded view of the waterproof key structure. The waterproof key structure includes a shell 1, a key 2, an elastic member 3, and a circuit board assembly 4. Referring to FIGS. 4-5, the silicone member 3 includes a tubular structure 31 and a flange 32. The tubular structure 31 includes a bottom surface 34. The bottom surface 34 is formed with an elastic wall 33. The elastic wall is of an arched structure. The elastic wall 33 protrudes towards inside of the tubular structure 31. The elastic wall 33 includes an inner surface 35 and an outer surface 36. A flat surface 37 is formed at the center of the inner surface 35. A post 38 is formed at the center of the outer surface 36. Referring to FIGs. 3, 7, and 8, a groove 11 is defined in the shell 1 and shaped in accordance with a shape of the flange 32. A hole 12 is defined on the bottom surface of the groove 11 corresponding to the tubular structure 31. The flange 32 is assembled to the bottom of the groove 11 and on the periphery of the hole 12, meanwhile the tubular structure 31 is press fitted in the hole 12. Referring to FIGs. 6, 7 and 8, the key 2 includes a key cap 21 and a bulge 22. The key 2 is further formed with hooks 23. The shell 1 defines the same number of matching slots 13 as that of the hooks 23. The hooks 23 are movable assembled in the corresponding slots 13 to realize the movement and stop of the key 2. Meanwhile, the bulge 22 is assembled in the tubular structure 31 and contacts the flat surface 37 of the elastic member 3. Meanwhile, a through hole 14 is defined at the center of the bottom surface of the hole 12 and a step 15 is formed between them. The through hole 14 faces the elastic wall 33 and the post 38. The bottom surface 34 of the tubular structure 31 abuts against the step 15. Referring to FIGs. 2, 7, and 8, the circuit board assembly 4 is connected to a switch 41. The switch 41 is assembled on the shell 1 and faces the through hole 14. The post 38 abuts against the switch 41 via the through hole 14. When the key 21 is pressed, the bulge 22 conducts the force to the elastic wall 33. The elastic wall 33 deforms, and exerts the force on the switch 41 via the post 38 to trigger the switch 41.

Furthermore, Gum may be applied on the bottom surface of the groove 11. The flange 32 and the bottom of the groove 11 are adhesively assembled together to improve water resistance of the shell 1. Of course, the gum may be applied on the flange 32.

Obviously, for the tubular structure 31 and the hole 12 are press-fitted together, and the length of the tubular structure 31 makes that the press-fitting assembly has a larger deformable length, thus both the water resistance effect and reliability can be better ensured. Therefore, when the waterproof key structure adopts the press-fitting assembly for water resistance, assembling the flange 32 to the bottom surface of the groove 11 can also be carried out using a non-adhesive method.

Furthermore, the flange 32 is formed with a PET layer 39. The PET layer 39 is assembled at the bottom surface of the groove 11. Thus, when the tubular structure 31 is press-fitted in the hole 12, and deforms towards inside under the press of the wall of the hole 12, for the PET layer 39 is rigid, the PET layer 39 pulls the tubular structure 31 to reduce the deforming of the tubular structure 31, thus to maintain the integrity of the press-fitted assembly of the tubular structure 31 and the hole 12. Furthermore, because of the PET layer 39, the elastic member 3 is easier to be picked and positioned during assembling, and assembly productivity is improved. The PET layer 39 can be replaced by a PC layer or a metal layer, etc.. In the above waterproof key structure, for the existence of the elastic wall 33, when the silicone member 3 is pressed by the key 2, only the elastic wall 33 deforms. Furthermore, for the elastic wall 33 is of an arched structure and has a deformable length, the deformation of the elastic wall has little effect on others, and thus does not destabilize the assembly of the elastic member 3 to the shell 1. Therefore, key failure resulting from the silicone member 3 breaking away from the shell 1 is reduced. Furthermore, the bottom surface 34 of the tubular structure abuts against the step 15, when the elastic member 3 deforms under press, the bottom surface 34 is supported by the step 15, and thus only the elastic wall 33 deforms, which further ensures that the deformation of the elastic wall 33 does not affect the assembly relationship of the other parts of the silicone member 3. What is more, because of the press fitting of the tubular structure 31 and the hole 12, the water resistance between the key 2 and the shell 1 is ensured to be more reliable. In addition, the bulge 22 contacts with the flat surface 37, the pressing force on the key 2 are passed via the flat surface 37, which makes the force passing more even and effective. At the same time because of the post 38, it not only provides users good feeling of the key 2, but also reduces the impact the key 2 applies to the switch 41 when the product drops, and ensures the switch 41 does not break way from the circuit board assembly 4 and thus can work all the time.

With the above-described embodiments, the waterproof key structure of the waterproof mobile phone of the present invention, of which the design points are: in consideration of the silicone member of prior art being repeated deformed to pass force and thus breaking away from the shell, and resulting in key failure and waterproofing failure, the present invention improves the silicone member of prior art, and forms an elastic wall of an arched structure at the bottom surface of the tubular structure to deform during presses of the key and provide an elastic travel required to trigger the switch, at the same time press-fits the tubular structure and the shell together for water resistance, and further forms a rigid layer on the flange of the silicone member, in the embodiment being a PET layer, to improve assembly performance of the silicone member and ensure the press-fitting working, and in addition forms a post on the silicone member, to improve the hand feeling of the key by changing the thickness of the post and reduce the impact on the switch when the product drops.

The above description in conjunction with the accompanying drawings describes the waterproof outdoor mobile phone with waterproof key structure of the present invention in detail, but the design idea or thought of the present invention can be applied to all waterproof key structure, and its application fields can be all outdoor electronic products, as long as those products need waterproof key structure, and need to improve hand feeling as well as waterproofing, and need to ensure the key working and etc. all of which can make change to the idea of the present invention and develop the idea of the present invention.

## Claims

1. A waterproof key structure, comprising a shell (1), a key (2) and an elastic member (3), the elastic member (3) being adhesively assembled to the shell (1), the key (2) movably assembled to the shell (1) and engaged with the elastic member (3), wherein: the elastic member (3) comprises a tubular structure (31) formed with an elastic wall (33), the elastic wall (33) is of an arched structure, the elastic wall protrudes towards inside of the tubular structure (31) to form the elastic member (3), **characterized in that**:
the elastic wall (33) comprises an inner surface (35) and an outer surface (36), a flat surface (37) is formed at the center of the inner surface (35), the key includes a bulge (22) contacting with the flat surface (37), the pressing force on the key (2) being passed via the flat surface (37).

2. The waterproof key structure as claimed in claim 1, wherein: the elastic member (3) further comprises a flange (32), , a groove (11) is defined in the shell (1) and shaped in accordance with a shape of the flange (32), bottom of the groove (11) is defined with a hole (12) corresponding to the tubular structure (31), the flange (32) is assembled to the bottom of the groove and on the periphery of the hole (12), the tubular structure (31) is press-fitted in the hole (12).

3. The waterproof key structure as claimed in claim 2, wherein: the tubular structure (31) comprises a bottom surface (34), the elastic wall (33) is formed on the bottom surface (34).

4. The waterproof key structure as claimed in claim 3, wherein: a post (38) is formed at the center of the outside surface (36).

5. The waterproof key structure as claimed in claim 2, wherein: a through hole (14) is defined at center of bottom of the hole (12) and a step (15) is formed at the bottom of the hole, the through hole (14) faces the elastic wall (33) and the post (38), and the bottom surface (34) of the tubular structure (31) abuts against the step (15).

6. The waterproof key structure as claimed in claim 2, wherein: gum is applied on at least one of the bottom of the groove (11) and the flange (32), the elastic member (3) and the shell (1) are adhesively assembled together by the gum.

7. The waterproof key structure as claimed in claim 2, wherein: the flange (32) is formed with a rigid layer (39), the rigid layer (39) pulling the tubular structure (31) to reduce the deforming of the tubular structure under the press of the wall of the hole (12).

8. The waterproof key structure as claimed in claim 7, wherein: the rigid layer is made of PC, PET or metal.

9. The waterproof key structure as claimed in claim 1, wherein the elastic member (3) is made of silicone.

10. A waterproof mobile phone, comprising: a waterproof key structure as claimed in any one of claims 1-9.

## Patentansprüche

1. Wasserdichte Tastenstruktur, umfassend eine Hülle (1), eine Taste (2) und ein elastisches Glied (3),
wobei das elastische Glied (3) verklebt mit der Hülle (1) verbaut ist, wobei die Taste (2) bewegbar mit der Hülle (1) verbaut ist und mit dem elastischen Glied (3) eingreift, wobei: das elastische Glied (3) eine rohrförmige Struktur (31) umfasst, die mit einer elastischen Wand (33) gebildet ist, wobei die elastische Wand (33) von einer gewölbten Struktur ist, wobei die elastische Wand zu dem Inneren der rohrförmigen Struktur (31) hin hervorsteht, um das elastische Glied (3) zu bilden, **dadurch gekennzeichnet, dass**:
die elastische Wand (33) eine innere Oberfläche (35) und eine äußere Oberfläche (36) umfasst, eine flache Oberfläche (37) in der Mitte der inneren Oberfläche (35) gebildet ist, die Taste eine Ausbauchung (22) beinhaltet, die mit der flachen Oberfläche (37) in Kontakt steht, wobei die Druckkraft auf die Taste (2) über die flache Oberfläche (37) weitergegeben wird.

2. Wasserdichte Tastenstruktur nach Anspruch 1, wobei: das elastische Glied (3) weiter einen Flansch (32) umfasst, eine Nut (11) in der Hülle (1) definiert ist und gemäß einer Form des Flansches (32) gebildet ist, ein Boden der Nut (11) mit einem Loch (12) definiert ist, das der rohrförmigen Struktur (31) entspricht, der Flansch (32) mit dem Boden der Nut und an der Peripherie des Lochs (12) verbaut ist, wobei die rohrförmige Struktur (31) in das Loch (12) pressgepasst ist.

3. Wasserdichte Tastenstruktur nach Anspruch 2, wobei: die rohrförmige Struktur (31) eine untere Oberfläche (34) umfasst, wobei die elastische Wand (33) auf der unteren Oberfläche (34) gebildet ist.

4. Wasserdichte Tastenstruktur nach Anspruch 3, wobei: ein Pfosten (38) in der Mitte der äußeren Oberfläche (36) gebildet ist.

5. Wasserdichte Tastenstruktur nach Anspruch 2, wobei: ein Durchgangsloch (14) in der Mitte des Bodens des Lochs (12) gebildet ist und eine Stufe (15) an dem Boden des Lochs gebildet ist, das Durchgangsloch (14) zu der elastischen Wand (33) und dem Pfosten (38) zeigt, und die untere Oberfläche (34) der rohrförmigen Struktur (31) gegen die Stufe (15) angrenzt.

6. Wasserdichte Tastenstruktur nach Anspruch 2, wobei: Gummi auf mindestens einem von dem Boden der Nut (11) und dem Flansch (32) aufgebracht ist, wobei das elastische Glied (3) und die Hülle (1) durch das Gummi verklebt mit einander verbaut sind.

7. Wasserdichte Tastenstruktur nach Anspruch 2, wobei: der Flansch (32) mit einer festen Schicht (39) gebildet ist, wobei die feste Schicht (39) die rohrförmige Struktur (31) zieht, um die Verformung der rohrförmigen Struktur unter dem Druck der Wand des Lochs (12) zu verringern.

8. Wasserdichte Tastenstruktur nach Anspruch 7, wobei: die feste Schicht aus PC, PET oder Metall hergestellt ist.

9. Wasserdichte Tastenstruktur nach Anspruch 1, wobei das elastische Glied (3) aus Silikon hergestellt ist.

10. Wasserdichtes Mobiltelefon, umfassend: eine wasserdichte Tastenstruktur nach einem der Ansprüche 1-9.

## Revendications

1. Structure de touche étanche à l'eau, comprenant une coque (1), une touche (2) et un élément élastique (3), l'élément élastique (3) étant assemblé de manière adhésive à la coque (1), la touche (2) étant assemblée de manière mobile à la coque (1) et en prise avec l'élément élastique (3), dans laquelle : l'élément élastique (3) comprend une structure tubulaire (31) formée avec une paroi élastique (33), la paroi élastique (33) est à structure arquée, la paroi élastique fait saillie vers l'intérieur de la structure tubulaire (31) pour former l'élément élastique (3), **caractérisée en ce que** :
la paroi élastique (33) comprend une surface interne (35) et une surface externe (36), une surface plane (37) est formée au centre de la surface interne (35), la touche comporte une protubérance (22) en contact avec la surface plane (37), la force d'appui sur la touche (2) étant transmise par l'intermédiaire de la surface plane (37).

2. Structure de touche étanche à l'eau selon la revendication 1, dans laquelle : l'élément élastique (3) comprend en outre une bride (32), une rainure (11) est définie dans la coque (1) et façonnée selon une forme de la bride (32), un fond de la rainure (11) est défini avec un trou (12) correspondant à la structure tubulaire (31), la bride (32) est assemblée au fond de la rainure et sur la périphérie du trou (12), la structure tubulaire (31) est emmanchée à force dans le trou (12).

3. Structure de touche étanche à l'eau selon la revendication 2, dans laquelle : la structure tubulaire (31) comprend une surface inférieure (34), la paroi élastique (33) est formée sur la surface inférieure (34).

4. Structure de touche étanche à l'eau selon la revendication 3, dans laquelle : un montant (38) est formé au centre de la surface extérieure (36).

5. Structure de touche étanche à l'eau selon la revendication 2, dans laquelle : un trou traversant (14) est défini au centre du fond du trou (12) et un gradin (15) est formé au fond du trou, le trou traversant (14) fait face à la paroi élastique (33) et au montant (38), et la surface inférieure (34) de la structure tubulaire (31) bute contre le gradin (15).

6. Structure de touche étanche à l'eau selon la revendication 2, dans laquelle : une gomme est appliquée sur au moins l'un du fond de la rainure (11) et de la bride (32), l'élément élastique (3) et la coque (1) sont assemblés conjointement de manière adhésive par la gomme.

7. Structure de touche étanche à l'eau selon la revendication 2, dans laquelle : la bride (32) est formée avec une couche rigide (39), la couche rigide (39) tirant la structure tubulaire (31) pour réduire la déformation de la structure tubulaire sous la pression de la paroi du trou (12).

8. Structure de touche étanche à l'eau selon la revendication 7, dans laquelle : la couche rigide est en PC, en PET ou en métal.

9. Structure de touche étanche à l'eau selon la revendication 1, dans laquelle l'élément élastique (3) est en silicone.

10. Téléphone mobile étanche à l'eau, comprenant : une structure de touche étanche à l'eau selon l'une quelconque des revendications 1 à 9.
